# FASCICULE DE BREVET EUROPEEN

(11) **EP 0 389 321 B1**
(45) Date de publication et mention de la délivrance du brevet: **21.09.1994**
(21) Numéro de dépôt: 90400581.6
(22) Date de dépôt: 02.03.1990
(51) Int. Cl.: A01D 85/00

(54) **Dispositif de groupage de balles de fourrage**
Ballensammelgerät
Apparatus for grouping fodder bales

(30) Priorité: 03.03.1989 FR 8902831
(43) Date de publication de la demande: 26.09.1990
(73) Titulaire: NEW HOLLAND BELGIUM N.V., B-8210 Zedelgem (BE)
(72) Inventeur: Berlivet, Marc A., F-85220 Lachapelle Hermier (FR); Barreteau, Jean Jacques H., F-85800 St Gilles Croix de Vie (FR); Mathis, Michel H., F-85300 Challans (FR)
(74) Mandataire: Clanet, Denis

(56) Documents cités:
- EP-A- 0 108 277
- EP-A- 0 247 700
- FR-A- 1 231 126
- FR-A- 1 263 664

## Description

La présente invention concerne un dispositif de groupage de balles de fourrage, plus particulièrement destiné à grouper par superposition deux balles parallélépipédiques produites par une ramasseuse-presse.

Depuis quelques années sont apparues sur le marché des ramasseuses-presses capables de produire des balles de fourrage rectangulaires de grandes dimensions, c'est-à-dire dans une gamme comprise entre 80 x 80 x 150 et 100 x 120 x 250 (centimètres).

Compte tenu de l'investissement, des machines se sont rapidement répandues dans les exploitations de grande surface.

Il s'agit toutefois de machines coûteuses, de taille et de poids importants qui nécessitent souvent des tracteurs de puissance supérieure.

Il est donc apparu un besoin de réaliser des ramasseuses-presses de taille intermédiaire et mieux adaptées aux exploitations de moyenne surface, produisant des balles dont l'épaisseur ne serait que la moitié de celle des balles produites par les machines actuellement sur le marché.

Cependant, pour un même tonnage de fourrage, le nombre de balles double, ce qui augmente corrélativement les opérations et les frais de manutention des balles.

Pour éviter cet inconvénient, la présente invention a pour objet un dispositif destiné à grouper par superposition deux balles parallélépipédiques produites par de telles ramasseusespresses, afin de constituer des paires de balles superposées dont les dimensions et le poids égalent sensiblement ceux des balles produites par les ramasseuses-presses de grandes dimensions, et peuvent être manutentionnées ensemble.

Le brevet français n° 1.231.126 décrit un groupeur de balles parallélépipédiques monté sur une presse et permettant de juxtaposer bout à bout, suivant un seul lit, de telles balles sur des glissières et de déposer sur le sol ce lit par pivotement desdites glissières lorsqu'elles sont pleines.

Le brevet français n° 1.263.664 décrit un traineau pour balles parallélépipédiques alimenté par la presse qui le tracte de façon à aligner jusqu'à une porte ou grille arrière une première couche des balles délivrées par la presse, puis sur cette couche inférieure une deuxième couche superposée. Pendant ce chargement, la couche inférieure glisse sur le sol en reposant sur celui-ci soit directement soit par l'intermédiaire d'un plancher constitué par deux barres rondes. Lorsque la dernière balle de la couche supérieure est rangée, la première balle de cette couche supérieure ouvre la porte ou grille arrière. Le chargement pesant sur le sol reste en place, tandis que le traineau poursuit son cheminement.

Ce traineau permet d'accroître le volume du groupage, mais la chute des balles pour constituer la couche inférieure étant relativement importante, lesdites balles risquent d'être endommagées et le groupement de celles-ci risque de se destabiliser, la manipulation des balles de tels groupements devenant délicate, sinon impossible. En outre, le glissement des balles de la couche supérieure sur celles de la couche inférieure risque d'endommager ladite couche inférieure.

La demande de brevet européen n° 0 247 700 décrit un dispositif pour charger et décharger des balles parallélépipédiques Il comprend un châssis tracté par une ramasseuse-presse et délimitant des couloirs longitudinaux fixes de stockage dont le fond est constitué par des volets pivotants. Le châssis est équipé de moyens de guidage en translation transversale d'un chariot longitudinal dont le fond est constitué par des volets pivotants. Le chariot coopère avec un élévateur qui l'alimente avec les balles produites par la presse. Lorsque le chariot est plein et amené au-dessus d'un couloir, l'ouverture des volets de ce chariot est commandée et les balles chutent dans le couloir considéré jusqu'à son fond ou la dernière couche déposée. En se déplaçant transversalement, le chariot peut remplir tous les couloirs. Lorsque tel est le cas, l'ouverture des volets desdits couloirs est commandée et le groupement complet des balles chute sur le sol.

Comme précédemment, les balles et le groupement risquent d'être détériorés par la chute desdites balles les unes sur les autres et de l'ensemble sur le sol.

Pour remédier à ces inconvénients, le dispositif de groupage selon l'invention comprend un châssis porté par au moins deux roues et pourvu d'un timon de remorquage susceptible d'être attelé à une ramasseuse-presse délivrant des balles, ledit châssis comportant deux paires de glissières latérales escamotables, une paire supérieure située à un niveau correspondant sensiblement au niveau du plan de sortie de la ramasseuse-presse et l'autre paire inférieure située au-dessous de la première et à une distance correspondant approximativement à une épaisseur de balle ;
et conformément à l'invention, les glissières de la paire supérieure sont inclinées vers le bas depuis leur extrémité avant.

Ainsi en utilisation, le groupeur commence par recevoir sur la paire de glissières supérieure directement depuis le plan de sortie de la ramasseuse-presse une première balle qui s'achemine vers l'arrière en descendant, puis après escamotage de la paire de glissières supérieure, la balle descend de l'arrière jusqu'aux glissières inférieures et bascule vers l'avant pour reposer sur celles-ci ; une seconde balle est alors admise sur la première balle, puis enfin, les deux balles ainsi superposées sont libérées ensemble par escamotage de la paire de glissières inférieure.

Les détails et avantages de l'invention apparaîtront clairement à la lecture de de la description qui va suivre en se référant aux dessins annexés, dans lesquels :
- la figure 1 est une vue en perspective d'un groupeur de balles selon l'invention, et

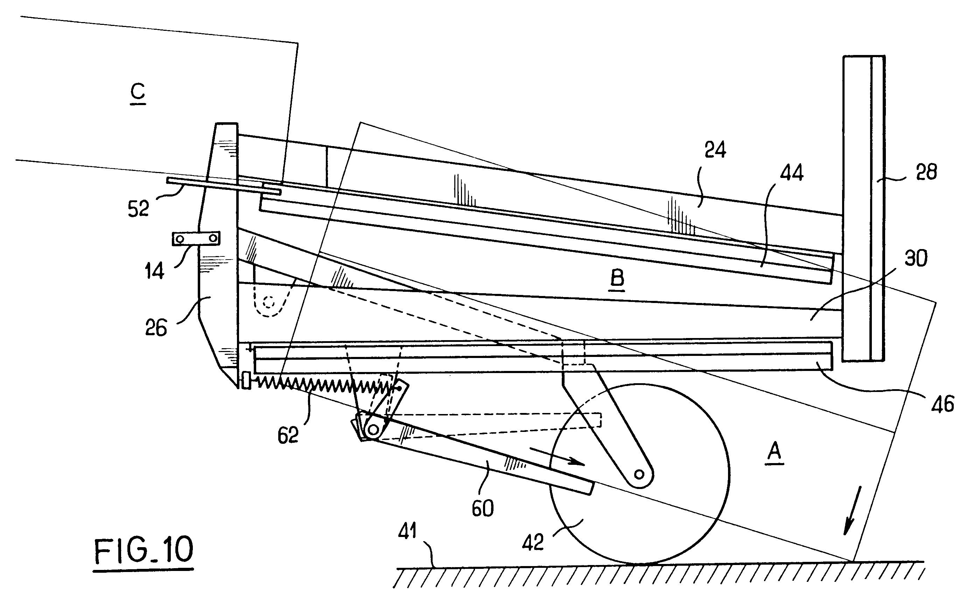

- les figures 2 à 10 sont des vues partielles schématiques illustrant son fonctionnement.

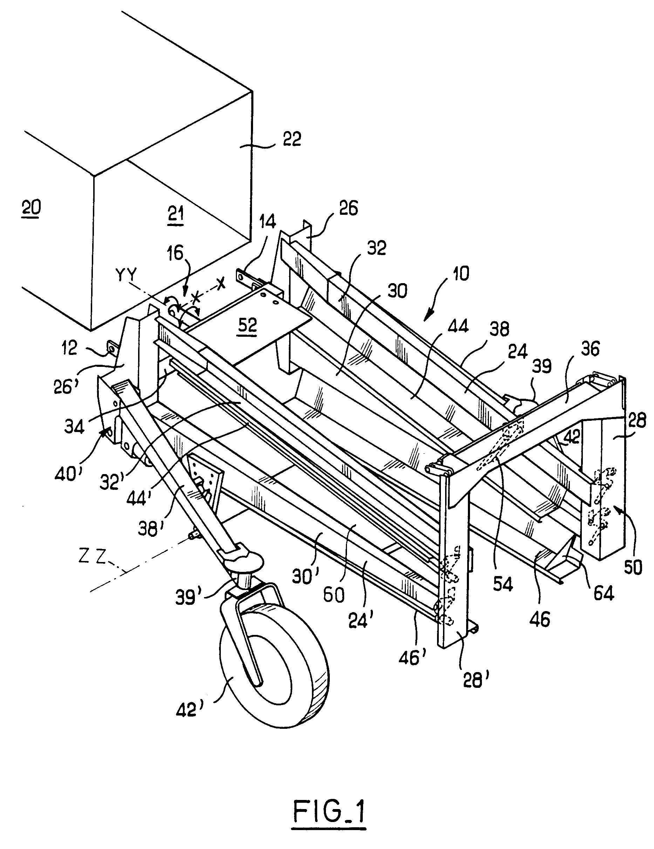

Le groupeur 10 illustré à vide à la figure 1 est destiné à être remorqué derrière une ramasseuse-presse 20 qui n'a pas été représentée en détail, seule l'extrémité arrière de son canal de pressage 22 par lequel sortent les balles de fourrage comprimé apparaissant à la figure.

La ramasseuse-presse pourra être de tout type connu, destinée à produire des balles parallélépipédiques d'une largeur et d'une longueur sensiblement égales à celles que produisent les machines de grande taille actuelles : soit l de l'ordre de 0 m 80 à 1 m 20 et L de l'ordre de 1 m 50 à 2 m 50. Par contre, la hauteur de balle est seulement la moitié des hauteurs de balle courantes, soit de 0m40 à 0m60.

Le groupeur de balle est attelé à la ramasseuse-presse au moyen d'une paire de biellettes latérales 12, 14 et d'un attelage ou timon central 16 à deux axes de rotation, un axe transversal XX et un axe longitudinal YY afin de se présenter constamment sensiblement dans l'alignement du canal 22 de la ramasseuse-presse.

Le groupeur de balle comporte un châssis 18 formé de deux côtés 24 et 24' droit et gauche respectivement.

Chaque côté du châssis est formé de deux poutres verticales 26, 28, avant et arrière 26', 28' respectivement, et de poutres longitudinales reliant les deux poutres verticales. Une première poutre longitudinale inférieure 30, 30' s'étend sensiblement horizontalement, tandis qu'une poutre longitudinale supérieure 32, 32' est inclinée en descendant vers l'arrière, la distance entre les poutres inférieure et supérieure étant à l'avant sensiblement égale ou à peine supérieure à l'épaisseur de balle.

Les deux côtés 24, 24' de châssis sont reliés entre eux à l'avant par une poutre transversale médiane 34, entre les poutres verticales avant 26, 26', qui porte l'attelage central 16 ; et à l'arrière par une poutre transversale supérieure 36 entre les sommets des poutres verticales arrière 28, 28'.

De part et d'autre du bâti s'étendent des bras de roue 38, 38' articulés vers l'avant du châssis, sur les poutres verticales avant 26, 26' par des articulations à amortissement 40, 40'.

Les bras de roue sont inclinés vers le bas et vers l'arrière et portent à leur extrémité des roues trainées à orientation libre, autour d'un pivot sensiblement vertical 39, 39' dites roues "jockey" 42, 42' dotées d'un frein destiné à empêcher des oscillations incontrôlées des roues.

Sous les deux poutres supérieures 32, 32' sont disposées deux glissières longitudinales escamotables 44, 44' présentant en section la forme d'un L à deux branches sensiblement orthogonales, la branche verticale s'étendant sous la poutre et sensiblement sur toute sa longueur et montée sous la poutre avec faculté de basculement autour d'un axe longitudinal coïncidant sensiblement avec l'arête supérieure de la branche.

La glissière peut être amenée, à l'aide d'un mécanisme de déclenchement 50 qui sera décrit plus loin, d'une position de retenue dans laquelle la branche inférieure du L s'étend sensiblement horizontalement et vient faire saillie dans l'espace libre séparant les deux côtés de bâti 24, 24', et une position d'escamotage dans laquelle la branche inférieure est basculée vers le bas et s'étend sous la poutre, donc hors de l'espace libre séparant les deux côtés 24, 24'.

Il convient de comprendre que la glissière opposée 44' sous la poutre supérieure gauche 32' est montée de la même manière, à la symétrie près naturellement.

De même, sous les poutres horizontales inférieures 30, 30' sont montées deux glissières escamotables 46, 46' de même structure, également commandées par le mécanisme de déclenchement 50.

A la figure 1, le groupeur-superposeur de balles est présenté à vide, les deux paires de glissières 44, 44' et 46, 46' étant en position de retenue en saillie dans l'espace libre entre les côtés de bâti 24, 24'. Une plaque de transition 52 s'étend depuis la paroi inférieure 21 du canal de pressage 22 de la ramasseuse-presse jusqu'à la zone initiale avant des glissières supérieures 44, 44', afin de supporter les balles au cours de leur passage vers le groupeur de balles.

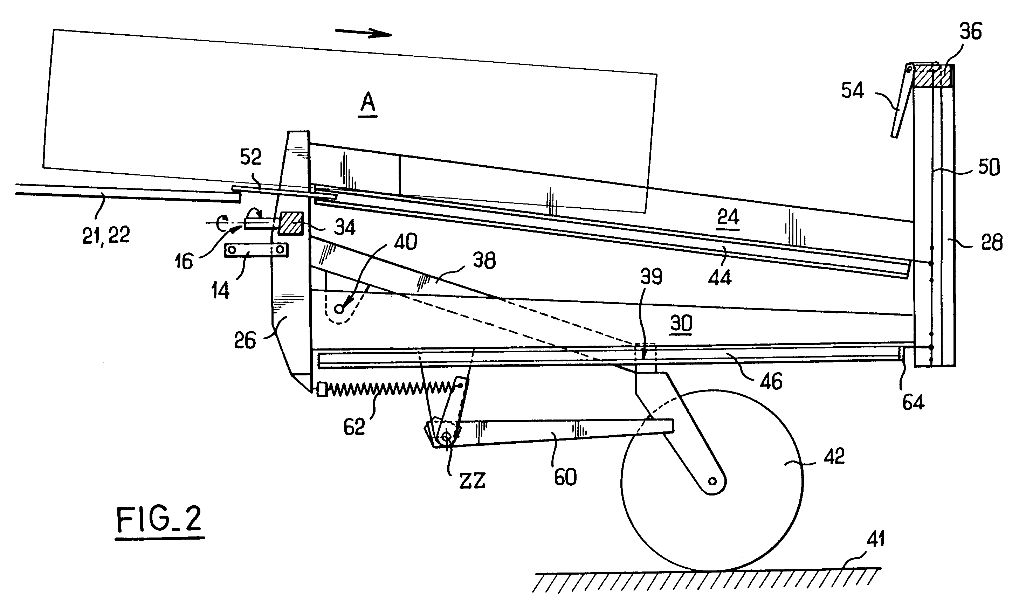

A la figure 2, qui illustre schématiquement une coupe longitudinale du groupeur de balles, on voit une première balle A progresser depuis la sortie 22 du canal de pressage, sur la plaque de transition 52 puis sur les glissières supérieures 44, 44', maintenues en position de retenue par le mécanisme 50.

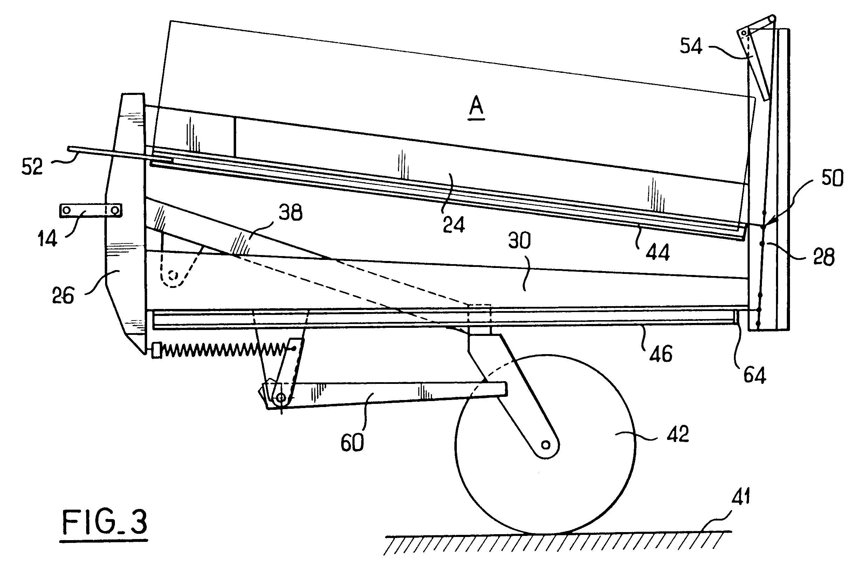

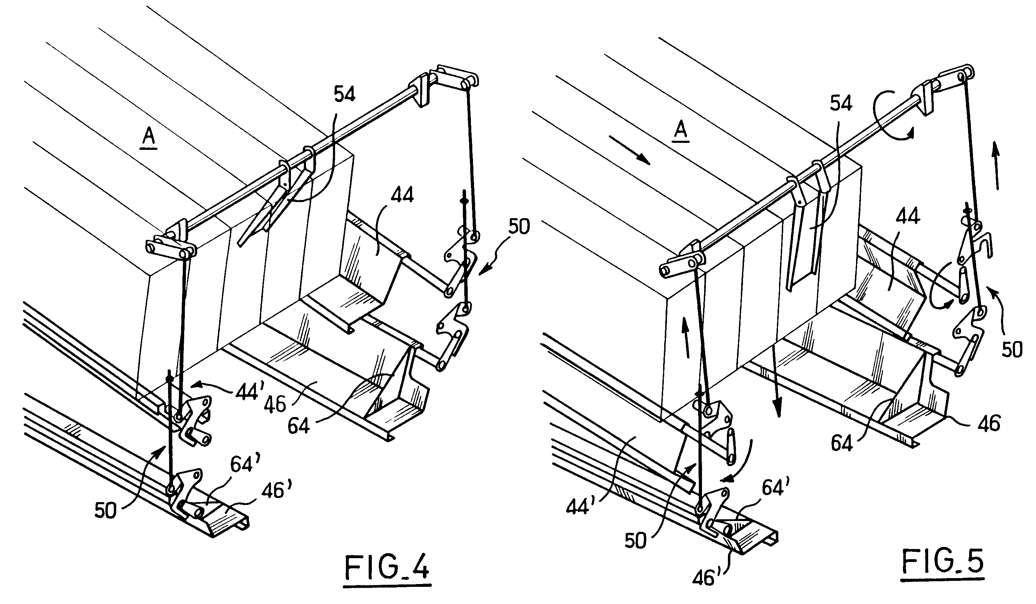

Aux figures 3 à 5, une fois que la balle A atteint l'extrémité arrière des glissières supérieures 44, 44', elle pousse une palette de commande 54 du mécanisme 50, ce qui a pour effet de libérer les glissières supérieures 44, 44' qui, sous le poids de la balle A, basculent en position escamotée sous les traverses supérieures 24, 24'.

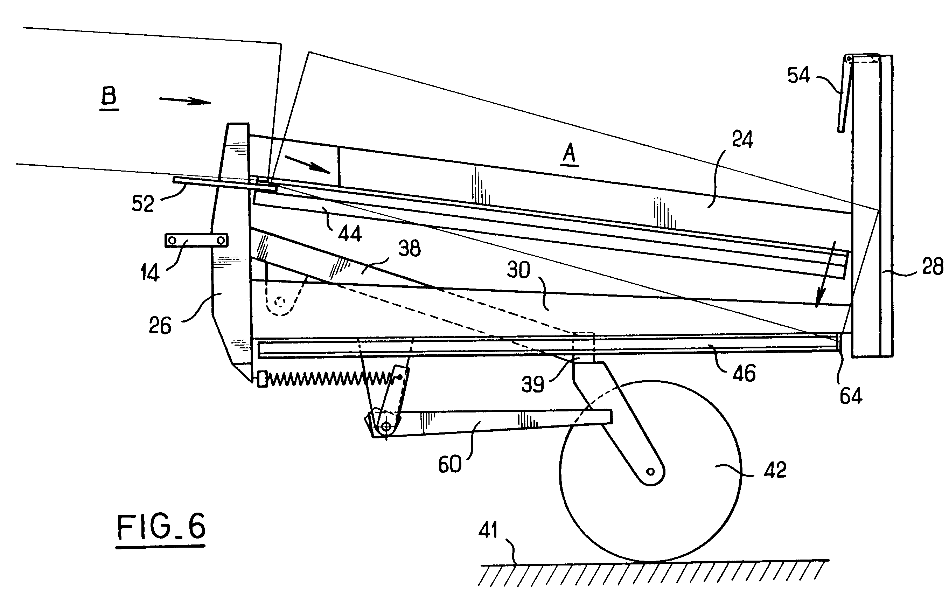

La partie avant de la balle A descend donc jusqu'au contact des glissières inférieures 46 et 46', comme illustré à la figure 6, la partie arrière restant momentanément maintenue en position haute par le nez de la plaque de transition 52. Dès que la balle suivante B commence à progresser sur la plaque de transition 52, elle repousse la partie arrière de la première balle A qui échappe donc au nez de la plaque de transition et descend sur les glissières inférieures 46, 46'.

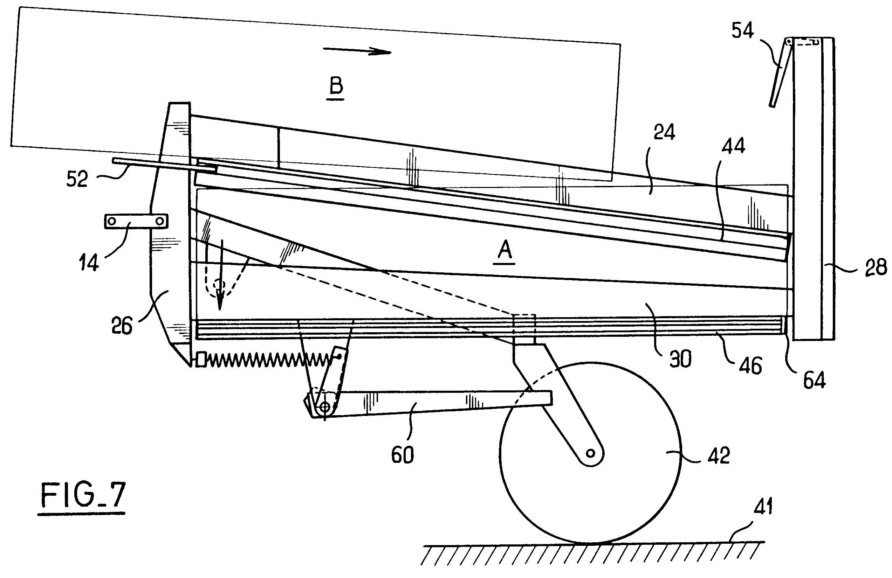

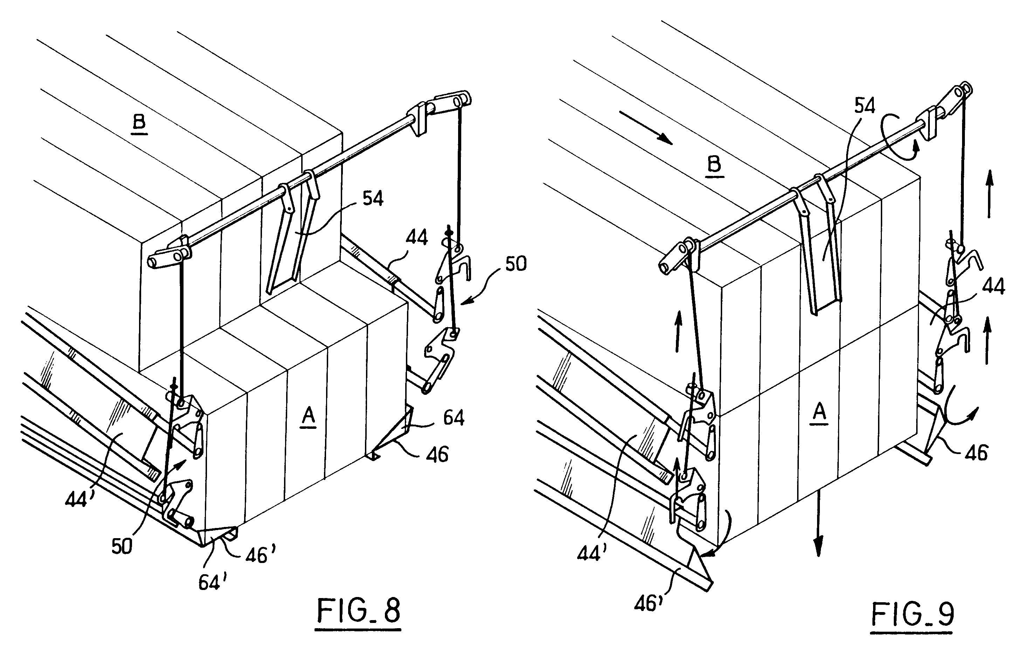

La seconde balle B progresse alors sur la plaque de transition et sur le sommet de la première balle A, comme illustré aux figures 7 et 8 jusqu'à ce que son extrémité avant vienne au même niveau que l'extrémité avant de la première balle, comme illustré à la figure 9, où elle engage la palette de commande 54 du mécanisme 50.

Le mécanisme 50 libère alors les glissières inférieures qui basculent en position escamotée sous le poids des deux balles et celles-ci commencent à descendre en direction du sol.

Sensiblement au centre du groupeur, entre les deux glissières inférieures et à un niveau légèrement inférieur, est prévu un volet 60 d'amortissement de chute, articulé par son bord avant autour d'un axe transversal ZZ et rappelé vers une position haute de repos par un ressort 62.

Ainsi, lorsque les deux balles commencent à descendre en direction du sol, seule l'arête postérieure inférieure de la première balle A vient en premier lieu en contact avec le sol, tandis que la partie avant de la face inférieure de cette même première balle A vient porter sur le volet amortisseur 60 qui la guide progressivement jusqu'au sol.

Grâce à cette disposition, la descente des deux balles vers le sol s'effectue très progressivement, de même que la décélération des deux balles qui dans le même temps passent d'une vitesse égale à celle de l'ensemble tracteur/ramasseuse/groupeur à une vitesse nulle.

En effet, en cas de chute brutale, on observerait un écrasement transitoire des deux balles arrivant au contact du sol, suivi immédiatement d'un rebond. Du fait que l'énergie cinétique de la balle supérieure B n'est pas encore nulle au moment de ce rebond, cette balle risquerait de se décaler légèrement et de manière incontrôlée dans le sens longitudinal par rapport à la balle inférieure A.

Au contraire, l'invention permet une descente et une décélération progressive des deux balles, ainsi qu'une prise de contact au sol pratiquement exempte de rebond, les deux balles restant ainsi pratiquement parfaitement superposées.

Une fois les deux balles posées au sol, une avance supplémentaire du groupeur permet aux glissières de reprendre automatiquement leurs positions de maintien sous l'effet de ressorts de rappel non représentés associés au mécanisme 50.

En se reportant à nouveau aux figures 7 et 8, dans la mesure où la seconde balle B progresse en glissant sur le sommet de la première, elle risque de repousser celle-ci légèrement vers l'arrière. On évite cet inconvénient en prévoyant aux extrémités arrière des glissières inférieures des goussets transversaux 64, 64' qui servent de butée aux coins inférieurs postérieurs de la première balle A et l'empêchent positivement de se déplacer vers l'arrière.

Lors du basculement des glissières escamotables inférieures 46, 46', les goussets suivent le même mouvement de basculement et libèrent les coins de la balle inférieure A qui peut ainsi descendre vers le sol et se dégager vers l'arrière par rapport au groupeur.

Bien entendu, les mouvements d'escamotage des glissières 44, 44' et 46, 46' doivent être parfaitement synchronisés, faute de quoi on risquerait de voir la première balle descendre "de travers" depuis les glissières supérieures vers les glissières inférieures, puis depuis les glissières inférieures vers le sol. Au mieux, il en résulterait une dépose au sol des balles une par une et non superposées, au pire un blocage complet du groupeur, et pratiquement certainement des détériorations.

A cet effet, le mécanisme 50 comprend tous les organes nécessaires de réglage afin d'obtenir un tel synchronisme.

Avantageusement, on prévoira à l'extrémité avant du groupeur des embiellages spécifiques de synchronisme à leviers inversés, par lesquels les glissières sont contraintes de s'escamoter rigoureusement simultanément même en cas de déréglage du mécanisme de commande 50. De tels embiellages sont bien connus des hommes de métier et n'ont pas été représentés.

On notera enfin que le mécanisme d'escamotage 50 doit être conçu afin d'obtenir un fonctionnement en deux séquences successives.

Dans la première séquence, la première balle A repousse la palette 54 et le mécanisme libère le basculement des glissières supérieures afin de laisser descendre la balle vers les glissières inférieures ; dans la seconde séquence, la seconde balle B repousse la palette 54 et le mécanisme libère le basculement des glissières inférieures afin de laisser descendre les balles superposées vers le sol 41.

La réalisation pratique d'un tel mécanisme relève de la compétence habituelle d'un homme de métier et pour cette raison, il n'a pas été décrit en détail.

## Revendications

1. Dispositif de groupage de balles de fourrage parallélépipédiques comprenant un châssis porté par au moins deux roues (42, 42') et pourvu d'un timon de remorquage (16) susceptible d'être attelé à une ramasseuse-presse délivrant des balles, ledit châssis comportant deux paires de glissières latérales escamotables, une paire supérieure (44, 44') destinée à être située à un niveau correspondant sensiblement au niveau du plan de sortie de la ramasseuse-presse et l'autre paire inférieure (46, 46') située au-dessous de la première et à une distance correspondant approximativement à une épaisseur de balle, les glissières (44, 44') de la paire supérieure étant inclinées vers le bas depuis leur extrémité avant.

2. Dispositif selon la revendication 1, caractérisé en ce que les glissières (44, 44', 46, 46') sont constituées par des pièces à section en forme de L, s'étendant longitudinalement sensiblement sur toute la longueur du châssis, articulées autour d'un axe de pivotement situé sensiblement à l'extrémité de la branche montante dudit L et mobiles entre une position de retenue dans laquelle les branches horizontales dudit L se projettent vers un espace intérieur du châssis, et une position escamotée dans laquelle lesdites branches horizontales sont situées hors de l'espace intérieur du châssis.

3. Dispositif selon la revendication 2, caractérisé en ce qu'il comprend un mécanisme (50) de commande de l'escamotage desdites glissières.

4. Dispositif selon la revendication 3, caractérisé en ce que ledit mécanisme de commande comprend une palette (54) actionnée par la balle elle-même.

5. Dispositif selon la revendication 3 ou 4, caractérisé en ce que le mécanisme de commande (50) commande séquentiellement l'escamotage des glissières supérieures (44, 44') et celui des glissières inférieures (46, 46').

6. Dispositif selon l'une quelconque des revendications 1 à 5, caractérisé en ce qu'il comprend un volet de retenue (60) situé sensiblement entre les glissières inférieures (46, 46') et à un niveau inférieur à celles-ci.

7. Dispositif selon l'une quelconque des revendications 1 à 6, caractérisé en ce qu'il comprend une plaque de transition (52) disposée du côté avant, aboutissant entre les glissières (44, 44') supérieures et destinée à maintenir l'extrémité arrière d'une balle tandis que l'extrémité avant de cette même balle repose sur les glissières inférieures (46, 46').

## Claims

1. Device for grouping parallelepipedic bales of fodder comprising a chassis carried by at least two wheels (42, 42') and provided with a drawbar (16) adapted to be coupled to a pick-up press delivering bales, said chassis comprising two pairs of retractable lateral slides, an upper pair (44, 44') situated at a level substantially corresponding to the level of the output plane of the pick-up press, and the other lower pair (46, 46') situated under the first and at a distance corresponding approximately to the thickness of a bale, the slides (44, 44') of the upper part being inclined downwardly from their front end.

2. Device according to claim 1, characterized in that the slides (44, 44', 46, 46') are constituted by two L-shaped sections which extend longitudinally over substantially the whole length of the chassis, are articulated about a pivoting axis situated substantially at the end of the vertical branch of said L and are movable, between a holding position, in which the horizontal branches of said L project into an inner space of the chassis, and a retracted position in which said horizontal branches are situated outside the space inside the chassis.

3. Device according to claim 2, characterized in that it comprises a control mechanism (50) for controlling the retraction of said slides.

4. Device according to claim 3, characterized in that said control mechanism comprises a lever (54) actuated by the bale itself.

5. Device according to claim 3 or 4, characterized in that the control mechanism (50) sequentially controls the retraction of the upper slides (44, 44') and that of the lower slides (46, 46').

6. Device according to any one of claims 1 to 5, characterized in that it comprises a holding plate (60) situated substantially between the lower slides (46, 46') and at a level lower than that of said lower slides.

7. Device according to any one of claims 1 to 6, characterized in that it comprises a transition plate (52) disposed on the front side, reaching up to between the upper slides (44, 44') and designed to hold the rear end of a bale while the front end of said bale rests on the lower slides (46, 46').

## Patentansprüche

1. Sammelgerät für parallelepipedische Futterballen, das einen von wenigstens zwei Rädern (42, 42') getragenen Rahmen aufweist und mit einer Anhängedeichsel (16) versehen ist, die an eine Ballen liefernde Bündelpresse angehängt werden kann, wobei der Rahmen zwei Paare von seitlichen, zurückziehbaren Führungsschienen aufweist, wobei ein oberes Paar (44, 44') dazu bestimmt ist auf einer Höhe zu liegen, die etwa der Höhe der Ausgangsebene der Bündelpresse entspricht und das andere, untere Paar (46, 46') unterhalb des ersten liegt und in einem Abstand, der etwa der Dicke eines Ballens entspricht, wobei die Führungsschienen (44, 44') des oberen Paares von ihrem vorderen Ende nach unten hin geneigt sind.

2. Vorrichtung nach Anspruch 1, dadurch gekennzeichnet, daß die Führungsschienen (44, 44', 46, 46') aus Teilen mit L-förmigem Querschnitt gebildet sind, die sich etwa längs über die gesamte Länge des Rahmens erstrecken, an einem Schwenkbolzen angelenkt sind, der etwa am Ende des nach oben gehenden Arms des L angebracht ist, und beweglich sind zwischen einer Haltestellung, in der sich die horizontalen Arme des L zu einem Innenraum des Rahmens erstrecken, und einer zurückgezogenen Stellung, in der die horizontalen Arme außerhalb des Innenraums des Rahmens liegen.

3. Vorrichtung nach Anspruch 2, dadurch gekennzeichnet, daß sie einen Steuerungsmechanismus (50) zum Zurückziehen der Führungsschienen umfaßt.

4. Vorrichtung nach Anspruch 3, dadurch gekennzeichnet, daß der Steuerungsmechanismus einen Flügel (54) aufweist, der von dem Ballen selbst bewegt wird.

5. Vorrichtung nach Anspruch 3 oder 4, dadurch gekennzeichnet, daß der Steuerungsmechanismus (50) sequentiel das Zurückziehen der oberen Führungsschienen (44, 44') und das der unteren Führungsschienen (46, 46') steuert.

6. Vorrichtung nach einem der Ansprüche 1 bis 5, dadurch gekennzeichnet, daß sie eine Halteklappe (60) aufweist, die etwa zwischen den unteren Führungsschienen (46, 46') und auf einer Höhe unterhalb von diesen liegt.

7. Vorrichtung nach einem der Ansprüche 1 bis 6, dadurch gekennzeichnet, daß sie eine vorn angebrachte Übergangsplatte (52) umfaßt, die zwischen den oberen Führungsschienen (44, 44') endet und dazu bestimmt ist, das hintere Ende eines Ballens zu halten, während das vordere Ende dieses Ballens auf den unteren Führungsschienen (46, 46') liegt.
